(19) Europäisches Patentamt / European Patent Office / Office européen des brevets

(11) **EP 2 747 916 B1**

(12) **FASCICULE DE BREVET EUROPEEN**

(45) Date de publication et mention
de la délivrance du brevet:
**02.05.2018 Bulletin 2018/18**

(21) Numéro de dépôt: **12750461.1**

(22) Date de dépôt: **02.08.2012**

(51) Int Cl.:
*B22F 3/105* (2006.01)     *B22F 7/06* (2006.01)
*B29C 67/00* (2017.01)     *C22C 1/04* (2006.01)
*C22C 1/10* (2006.01)     *B29C 64/153* (2017.01)

(86) Numéro de dépôt international:
**PCT/FR2012/051821**

(87) Numéro de publication internationale:
**WO 2013/026972 (28.02.2013 Gazette 2013/09)**

(54) **PROCÉDÉS DE FABRICATION D'UNE PIÈCE COMPRENANT DE L'ALUMINIUM**

VERFAHREN ZUR HERSTELLUNG EINES BAUTEILS MIT ALUMINIUM

METHODS FOR THE PRODUCTION OF A PART COMPRISING ALUMINIUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.08.2011 FR 1157493**

(43) Date de publication de la demande:
**02.07.2014 Bulletin 2014/27**

(73) Titulaires:
• **Université de Lorraine
54052 Nancy Cedex (FR)**
• **Centre National de la Recherche Scientifique
75016 Paris (FR)**
• **SA Ateliers Cini
54510 Tomblaine (FR)**

(72) Inventeurs:
• **KENZARI, Samuel
F-54200 Andilly (FR)**
• **FOURNEE, Vincent
F-54770 Laitre-sous-amance (FR)**

(74) Mandataire: **Gauer, Pierre et al
Ipsilon
Le Centralis
63, avenue du Général Leclerc
92340 Bourg-la-Reine (FR)**

(56) Documents cités:
**EP-A1- 1 468 812     FR-A1- 2 950 826**

• **KALOSHKIN S D ET AL: "Multi-scaled
polymer-based composite materials synthesized
by mechanical alloying", JOURNAL OF ALLOYS
AND COMPOUNDS, ELSEVIER SEQUOIA,
LAUSANNE, CH, vol. 483, no. 1-2, 26 août 2009
(2009-08-26), pages 195-199, XP026545525, ISSN:
0925-8388, DOI: 10.1016/J.JALLCOM.2008.07.230
[extrait le 2008-11-17]**
• **XIE X L ET AL: "Wear performance of ultrahigh
molecular weight polyethylene/quartz
composites", BIOMATERIALS, ELSEVIER
SCIENCE PUBLISHERS BV., BARKING, GB, vol.
24, no. 11, 1 mai 2003 (2003-05-01), pages
1889-1896, XP004412418, ISSN: 0142-9612, DOI:
10.1016/S0142-9612(02)00610-5**

**Description**

La présente invention concerne un procédé de fabrication de pièces fonctionnelles comprenant de l'aluminium, en particulier un procédé de fabrication rapide de pièces fonctionnelles composites comprenant de l'aluminium. Elle a également pour objet les pièces obtenues à l'aide du procédé.

Il est connu, pour obtenir des pièces fonctionnelles rigides présentant un aspect métallique d'aluminium moulé, de soumettre un mélange de poudres d'aluminium cristallin et d'une matrice de polyamide à un procédé de frittage sélectif par laser. De telles pièces sont par exemples commercialisées sous la dénomination DuraForm® AF par la société 3D SYSTEMS ou encore sous la dénomination ALUMIDE® par la société EOS.

Lorsque le mélange est fritté sous l'action du laser, les pièces ont l'inconvénient de présenter un taux de porosité élevé, et donc de ne pas être étanches sous pression. Il est ainsi nécessaire, si l'on veut obtenir une étanchéité satisfaisante, de recouvrir le matériau d'une couche de revêtement étanche, typiquement d'une couche de résine, ce qui rend le procédé de fabrication des pièces plus long et plus complexe.

Pour remédier à ces inconvénients, il a été proposé dans le document FR 2 950 826 un procédé qui comprend une étape de frittage sélectif par laser d'un mélange comprenant une poudre de polymère et une poudre d'un alliage d'aluminium quasi-cristallin.

Par ailleurs, le document EP 1 468 812 A1 décrit un mélange de poudre à fritter pour le prototypage rapide.

L'invention vise à améliorer les propriétés de dureté et de résistance à l'usure des pièces fonctionnelles obtenues par ce procédé, et à rendre ces pièces moins fragiles.

L'invention propose ainsi un procédé permettant d'obtenir rapidement des pièces fonctionnelles de forme complexe présentant un aspect métallique et qui possèdent une très bonne étanchéité, lesdites pièces présentant en outre une fragilité réduite et de très bonnes propriétés de dureté et de résistance à l'usure.

La présente invention a ainsi pour objet un procédé de fabrication d'une pièce comprenant de l'aluminium.

Le procédé selon l'invention comprend une étape de frittage sélectif par laser d'un mélange comprenant :

- une poudre de polymère,
- une poudre d'un alliage d'aluminium quasi-cristallin, et
- une poudre d'un composé de renfort formant un angle de contact avec une goutte de polymère posée à sa surface inférieur à 90° et présentant une conductivité thermique à 20 °C inférieure à 100 W/m.K,

la somme du poids de l'alliage et du poids du composé de renfort n'excédant pas 80 % du poids total du mélange.

Le poids de l'alliage est de préférence inférieur ou égal à 50 % de la somme du poids de l'alliage et du poids du composé de renfort. La quantité de poudre du composé de renfort est ainsi choisie de manière à ce que la fraction volumique du composé de renfort, après l'étape de frittage, n'excède pas 30 % du volume total de la pièce.

L'angle de contact est inférieur à 90°, et de préférence inférieur à 40°.

La conductivité thermique à 20 °C du composé de renfort est inférieure à 100 W/m.K, et de préférence inférieure à 60 W/m.K.

Le frittage sélectif par laser, également appelé Selective Laser Sintering (SLS) en langue anglaise, est un procédé permettant la mise en forme d'une pièce par apports successifs de matière sous forme de poudres.

Ce procédé utilise un laser pour transformer un matériau sous forme de poudres, comprenant un mélange de poudres métalliques et de poudre de polymère, en un objet solide par frittage sélectif sans pression extérieure.

Il est connu que le frittage sélectif par laser permet de réaliser des pièces sans contrainte de forme, avec une grande précision ($\pm 0.2$ mm), mais avec un taux de porosité important.

Lorsque le procédé est mis en oeuvre à partir d'un mélange de poudres comprenant une teneur limitée en alliage d'aluminium quasi-cristallin, la pièce obtenue présente un très faible taux de porosité, et donc une étanchéité plus élevée que lorsque le procédé est mis en oeuvre à partir de poudre d'aluminium cristallin. En utilisant un alliage d'aluminium quasi-cristallin, la pièce obtenue présente des propriétés mécaniques, notamment d'usure, de frottement et de dureté, améliorées.

La demanderesse a en outre découvert de manière surprenante qu'en ajoutant un composé présentant les propriétés décrites ci-dessus d'angle de contact et de conductivité thermique, la pièce obtenue conservait les propriétés d'étanchéité des pièces obtenues par le procédé du document FR 2 950 826 tout en présentant une fragilité moindre et une dureté et une résistance à l'usure améliorées. En outre, l'amélioration des propriétés est obtenue avec une fraction volumique de poudres d'alliage d'aluminium quasi-cristallin et de composé de renfort inférieure à celle nécessaire lorsque la poudre d'alliage d'aluminium quasi-cristallin est utilisée seule.

L'angle de contact peut être mesuré par toute technique connue de l'homme du métier, et notamment par le procédé dit « de la goutte posée ».

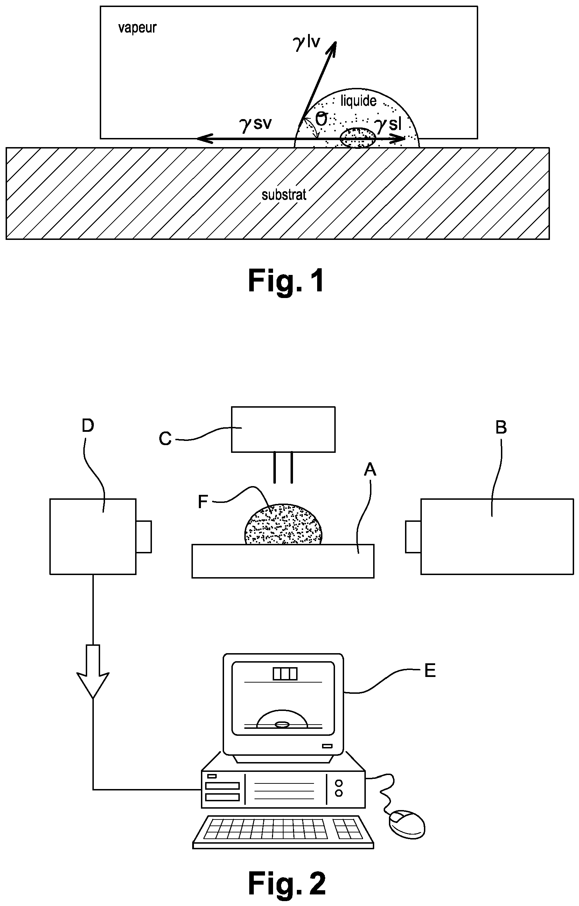

Cette méthode consiste à poser une goutte de liquide d'environ 0,4 µL sur la surface du matériau à étudier et à mesurer l'angle de contact $\theta$ entre le liquide et le solide. Cet angle correspond à l'angle entre la tangente à la goutte au point de contact et la surface du matériau (voir la figure 1). D'une façon générale, la forme d'une goutte à la surface d'un solide est régie par trois paramètres :

- l'énergie interfaciale solide/liquide ($\gamma_{sl}$)

- l'énergie interfaciale solide/vapeur ($\gamma_{sv}$)

- l'énergie interfaciale liquide/vapeur ($\gamma_{lv}$)

Ces trois grandeurs sont reliées à l'angle de contact θ par la loi d'Young (fig. 1) :

$$\gamma_{sv} = \gamma_{sl} + \gamma_{lv} . \cos \theta$$

Dans cette relation, les énergies interfaciales $\gamma_{sv}$, $\gamma_{sl}$ et $\gamma_{lv}$ sont exprimées en mJ.m$^{-2}$ et l'angle de contact en degrés.
À lui seul, l'angle de contact θ donne une indication sur la mouillabilité du matériau. En effet, la mesure de θ permet de déduire le caractère non-mouillant (grand angle, faible énergie interfaciale) ou mouillant (petit angle, grande énergie interfaciale) de la surface. Plus cet angle est faible, plus le liquide mouillera la surface. Inversement, le non mouillage complet sera obtenu avec un angle de 180° (soit une sphère de liquide en contact avec le substrat).
Le protocole utilisé pour préparer la surface des échantillons avant d'effectuer les mesures de l'angle de contact est illustré à la figure 2.
La surface des échantillons A est polie à l'eau avec du papier abrasif SiC jusqu'au grade 4000 (correspondant à une taille moyenne des grains inférieure à 8 μm). Les échantillons A sont ensuite nettoyés dans un bac à ultrasons puis rincés au méthanol et séchés avec un séchoir électrique. Avant et après chaque série de mesures, ils sont essuyés avec un papier optique puis laissés à l'air libre. Pour éviter de polluer les échantillons A avec les mains, ils sont manipulés à l'aide d'une pince métallique.
Les mesures sont réalisées par exemple à l'aide d'un appareil commercialisé sous la dénomination Digidrop Contact Angle Meter par la société GBX Scientific Instrument, et qui est situé dans une salle climatisée. Cet appareil est équipé d'une source lumineuse B, d'une seringue C commandée manuellement pour former la goutte à déposer, d'un porte échantillon dont le déplacement (horizontal et vertical) se fait également de façon manuelle et d'une caméra vidéo D permettant d'obtenir l'image de l'ensemble goutte-seringue-échantillon sur un écran d'un ordinateur E. Avant les mesures, une mise au point est faite avec la caméra D à l'endroit où une goutte F va être déposée. La mesure de l'angle θ est faite en mode automatique via une analyse dynamique de l'image.
Le mélange de poudres peut être constitué de poudre de polymère, de poudre d'alliage d'aluminium quasi-cristallin et de poudre de composé de renfort.
Le mélange peut aussi comprendre des adjuvants. On peut par exemple réaliser un traitement de fonctionnalisation de surface des particules avec de l'aminosilane afin d'améliorer l'adhérence entre la matrice de polymère et l'alliage et/ou le composé de renfort.
Le composé de renfort peut être choisi parmi les céramiques et les alliages métalliques.
Dans le cas où le composé de renfort est une céramique, celui-ci peut être choisi parmi les borures, les carbures, les oxydes, les nitrures et leurs mélanges.
Dans le cas où le composé de renfort est un alliage métallique, celui-ci peut être choisi parmi les aciers inoxydables (à base de fer), les alliages de titane (à base de titane), les bronzes (à base de cuivre), les superalliages (notamment à base de nickel, cobalt ou fer) et leurs mélanges. Le terme « à base de » signifie « comprenant plus de 50% en poids de ».
Le composé de renfort peut être tout particulièrement choisi parmi B$_4$C (carbure de Bore), WC/Co (carbure de tungstène/cobalt), TiB$_2$ (diborure de titane), TiO$_2$ (dioxyde de titane), les composés à base de Al$_2$O$_3$ (par exemple alumine, rubis, saphir), les composés à base de SiO$_2$ (par exemple silice, quartz, verre), ZrO$_2$ (la zircone), BN (nitrure de bore), Si$_3$N$_4$ (nitrure de silicium), les aciers inoxydables (par exemple Fe$_{72}$Cr$_{18}$Ni$_{10}$ ; Fe$_{70}$Cr$_{25}$Al$_5$), les alliages titane/aluminium/vanadium (par exemple de type TA6V (comme Ti$_{90}$Al$_6$V$_4$)), les alliages à base de cuivre (par exemple Bronze Cu$_{94}$Sn$_6$ ou Cu$_{89}$Sn$_{11}$ ; Cu$_{55}$Ni$_{45}$), les superalliages à base de nickel, de cobalt ou de fer, comme par exemple les alliages commercialisés sous la dénomination Inconel® par la société Special Metals Corporation. Le composé de renfort peut également être un mélange de ces différents composés.
La pièce obtenue par le procédé de l'invention est un matériau composite comprenant notamment une matrice de polymère, un alliage métallique complexe éventuellement multi-phasé, et un composé de renfort.
L'alliage d'aluminium quasi-cristallin peut être un alliage métallique complexe comprenant un pourcentage atomique d'aluminium supérieur à 50 %.
Le procédé de l'invention est mis en oeuvre à partir d'une poudre d'un alliage d'aluminium quasi-cristallin. Dans le présent texte, "alliage quasi-cristallin" désigne un alliage qui comprend une ou plusieurs phases quasi-cristallines qui sont soit des phases quasi-cristallines au sens strict, soit des phases approximantes. Les phases quasi-cristallines au sens strict sont des phases présentant des symétries de rotation normalement incompatibles avec la symétrie de translation, c'est-à-dire des symétries d'axe de rotation d'ordre 5, 8, 10 ou 12, ces symétries étant révélées par les techniques de diffraction. A titre d'exemple, on peut citer la phase icosaédrique de groupe ponctuel $m\overline{35}$ et la phase décagonale de groupe ponctuel 10/mmm.
Les phases approximantes ou composés approximants sont des cristaux vrais dans la mesure où leur structure cristallographique reste compatible avec la symétrie de translation, mais qui présentent, dans le cliché de diffraction d'électrons, des figures de diffraction dont la symétrie est proche d'une symétrie d'ordre 5, 8, 10 ou 12. Ce sont des phases caractérisées par une maille élémentaire contenant plusieurs dizaines, voir plusieurs centaines d'atomes, et dont l'ordre local présente des arrangements de symétrie presque icosaédrique ou décagonale similaire aux phases quasi-cristallines parentes.

Parmi ces phases, on peut citer à titre d'exemple la phase orthorhombique $O_1$, caractéristique d'un alliage ayant la composition atomique $Al_{65}Cu_{20}Fe_{10}Cr_5$, dont les paramètres de maille en nm sont : $a_0^{(1)} = 2,366$, $b_0^{(1)} = 1,267$, $c_0^{(1)} = 3,252$. Cette phase orthorhombique $O_1$ est dite approximante de la phase décagonale. La nature des deux phases peut être identifiée par microscopie électronique en transmission.

On peut également citer la phase rhomboédrique de paramètres $a_R = 3,208$ nm, $\alpha = 36°$, présente dans les alliages de composition atomique voisine de $Al_{64}Cu_{24}Fe_{12}$. Cette phase est une phase approximante de la phase icosaédrique.

On peut aussi citer des phases $O_2$ et $O_3$ orthorhombiques de paramètres respectifs en nm $a_0^{(2)} = 3,83$ ; $b_0^{(2)} = 0,41$ ; $c_0^{(2)} = 5,26$ ainsi que $a_0^{(3)} = 3,25$ ; $b_0^{(3)} = 0,41$ ; $c_0^{(3)} = 9,8$, présentes dans un alliage de composition atomique $Al_{63}Cu_{17,5}Co_{17,5}Si_2$ ou encore la phase orthorhombique $O_4$ de paramètres en nm $a_0^{(4)} = 1,46$ ; $b_0^{(4)} = 1,23$ ; $c_0^{(4)} = 1,24$, qui se forme dans l'alliage dont la composition atomique est $Al_{63}Cu_8Fe_{12}Cr_{17}$.

On peut encore citer une phase C, de structure cubique, très souvent observée en coexistence avec les phases approximantes ou quasi-cristallines vraies. Cette phase, qui se forme dans certains alliages Al-Cu-Fe et Al-Cu-Fe-Cr, consiste en une surstructure, par effet d'ordre chimique des éléments d'alliage par rapport aux sites d'aluminium, d'une phase de structure type Cs-Cl et de paramètre de réseau $a_1 = 0,297$ nm. Un diagramme de diffraction de cette phase cubique a été publié pour un échantillon de phase cubique pure et de composition atomique $Al_{65}Cu_{20}Fe_{15}$ en nombre d'atomes.

On peut aussi citer une phase H de structure hexagonale qui dérive directement de la phase C comme le démontrent les relations d'épitaxie observées par microscopie électronique entre cristaux des phases C et H et les relations simples qui relient les paramètres des réseaux cristallins, à savoir $a_H = 3\sqrt{2}a_1/\sqrt{3}$ (à 4,5 % près) et $c_H = 3\sqrt{3}a_1/2$ (à 2,5 % près). Cette phase est isotype d'une phase hexagonale, notée ΦAl-Mn, découverte dans des alliages Al-Mn contenant 40% en poids de Mn.

La phase cubique, ses surstructures et les phases qui en dérivent, constituent une classe de phases approximantes des phases quasi-cristallines de compositions voisines.

Les alliages quasi-cristallins du système Al-Cu-Fe et du système Al-Fe-Co-Cr sont particulièrement appropriés pour la mise en oeuvre du procédé de la présente invention. On peut citer en particulier les alliages qui ont l'une des compositions atomiques suivantes : $Al_{62}Cu_{25,5}Fe_{12,5}$, $Al_{59}Cu_{25,5}Fe_{12,5}B_3$, $Al_{71}Cu_{9,7}Fe_{8,7}Cr_{10,6}$, et $Al_{71,3}Fe_{8,1}Co_{12,8}Cr_{7,8}$. Ces alliages sont commercialisés par la société Saint-Gobain. En particulier, l'alliage $Al_{59}Cu_{25,5}Fe_{12,4}B_3$ est commercialisé sous la dénomination Cristome F1, l'alliage $Al_{71}Cu_{9,7}Fe_{8,7}Cr_{10,6}$ est commercialisé sous la dénomination Cristome A1, et l'alliage $Al_{71,3}Fe_{8,1}Co_{12,8}Cr_{7,8}$ est commercialisé sous la dénomination Cristome BT1. Ces alliages complexes ont pour avantage de posséder des propriétés tribologiques (frottement et usure), de surface (faible énergie de surface), mécaniques (dureté, limite d'élasticité et module d'Young), de conductivité thermique et électriques (résistivité élevée), différentes de celles des alliages d'aluminium cristallins.

Le polymère peut être par exemple choisi parmi les polymères organiques thermoplastiques tels que les polyamides (par exemple de type Nylon 6, Nylon 11, Nylon 12), les copolymères d'amide (par exemple le nylon 6-12), les polyacétates, les polyéthylènes, ainsi que le polyétheréthercétone, désigné par le sigle PEEK (PolyEtherEtherKetone en langue anglaise).

Les polymères préférés sont les polyamides et le polyétheréthercétone.

Pour une meilleure obtention de l'aspect métallique, le mélange peut contenir de 1 à 30 % en poids d'alliage d'aluminium quasi-cristallin, plus particulièrement de 10 à 20 %.

La fraction volumique de l'alliage d'aluminium quasi-cristallin pourra facilement être calculée par l'homme du métier à partir de la masse et de la masse volumique des différents constituants du mélange.

Le mélange peut contenir de 20 à 98 % en poids de polymère, plus particulièrement de 35 à 70 %.

Pour obtenir de meilleures propriétés mécaniques, le mélange peut contenir de 1 à 50 % en poids de composé de renfort, plus particulièrement de 10 à 45 %.

Dans le mélange de poudres utilisé pour la mise en oeuvre du procédé, les particules d'alliages ont de préférence une granulométrie moyenne inférieure à 120 μm, plus particulièrement comprise entre 10 et 75 μm, et les particules de polymère ont de préférence une granulométrie moyenne comprise entre 1 et 90 μm, plus particulièrement entre 40 et 75 μm.

Les particules de composé de renfort ont de préférence une granulométrie moyenne inférieure à 125 μm, plus particulièrement inférieure à 90 μm, et encore plus particulièrement comprise entre 10 et 75 μm.

Les particules d'alliage d'aluminium quasi-cristallin et de composé de renfort peuvent plus généralement avoir une granulométrie moyenne comprise entre 1 et 120 μm, et les particules de polymère peuvent avoir une granulométrie moyenne comprise entre 1 et 120 μm.

Le frittage sélectif par laser est de préférence assisté par ordinateur.

Dans un mode de réalisation particulier, le mélange de poudres est chauffé jusqu'à une température inférieure de quelques degrés Celsius à la température de fusion du polymère, par exemple jusqu'à une température inférieure de 1 à 10 °C à la température de fusion du polymère. L'énergie nécessaire à la fusion est ensuite apportée par le laser.

L'invention a également pour objet une pièce comprenant de l'aluminium obtenue par un procédé décrit ci-dessus. Les pièces obtenues peuvent présenter un taux de porosité volumique inférieur à 5 %, et notamment inférieur à 3 %, et plus particulièrement inférieur à 1 %.

De manière équivalente, la densité apparente égale au rapport masse/volume de la pièce peut être supérieure ou égale à 95 % de la densité théorique de la pièce, et notamment supérieure ou égale à 97 % de la densité théorique de la pièce, et plus particulièrement supérieure ou égale à 99 % de la densité théorique de la pièce.

Le procédé de l'invention est particulièrement utile pour la fabrication rapide de pièces légères de densité apparente comprise entre 1 et 3 g/cm$^3$ et sans contrainte de forme. Le frittage sélectif par laser permet une élaboration aisée et non toxique de pièces qui ont la forme complexe souhaitée. L'utilisation d'un alliage d'aluminium quasi-cristallin et d'un composé de renfort permet l'élaboration de pièces présentant une étanchéité supérieure à celle des pièces obtenues avec de l'aluminium cristallin.

Les pièces obtenues présentent en outre des propriétés mécaniques remarquables, et notamment des propriétés d'usure, de frottement et de dureté qui sont meilleures que celles des pièces obtenues avec de l'aluminium cristallin.

D'autres caractéristiques et avantages de la présente invention apparaîtront plus clairement à la lecture des exemples suivants, auxquels elle n'est cependant pas limitée, la description étant faite en référence aux dessins annexés sur lesquels :

- les figures 1 et 2, déjà décrites, sont utiles à la compréhension de l'invention, et
- la figure 3 illustre schématiquement un dispositif permettant de mettre en oeuvre le procédé selon l'invention.

**Exemple 1 : alliage d'aluminium quasi-cristallin seul**

Préparation de la poudre

On a préparé une poudre composite comprenant au moins deux natures de poudre différentes (polymère et alliage métallique complexe). Chaque nuance de poudre est pesée avec précision de sorte à obtenir une fraction volumique d'alliage métallique complexe dans la pièce composite finale de 30 %. Les poudres sont de préférence mélangées de façon homogène à l'aide d'un turbulat, ce qui permettra d'obtenir des pièces présentant des propriétés mécaniques et d'étanchéité homogènes. Environ dix à quinze minutes sont nécessaires pour mélanger 20 kg de poudres.

Fabrication des pièces en matériau composite

On a préparé plusieurs pièces composites en soumettant à un frittage sélectif par laser le mélange de poudres constitué par 65 % en poids d'une poudre d'un alliage AlCuFeB ayant une granulométrie comprise entre 10 et 75 µm et 35 % en poids d'une poudre de polyamide qui est une poudre de Nylon 12 ayant une granulométrie moyenne de 60 µm. L'alliage AlCuFeB est un alliage quasi-cristallin de composition atomique nominale $Al_{59}Cu_{25,5}Fe_{12,5}B_3$, commercialisé sous la dénomination Cristome F1 par la société Saint-Gobain. Cet alliage est constitué de la phase de structure complexe (icosaédrique i) isostructurale à la phase i-$Al_{62}Cu_{25,5}Fe_{12,5}$ et d'une phase cubique isostructurale à la phase β-$Al_{50}(CuFe)_{50}$.

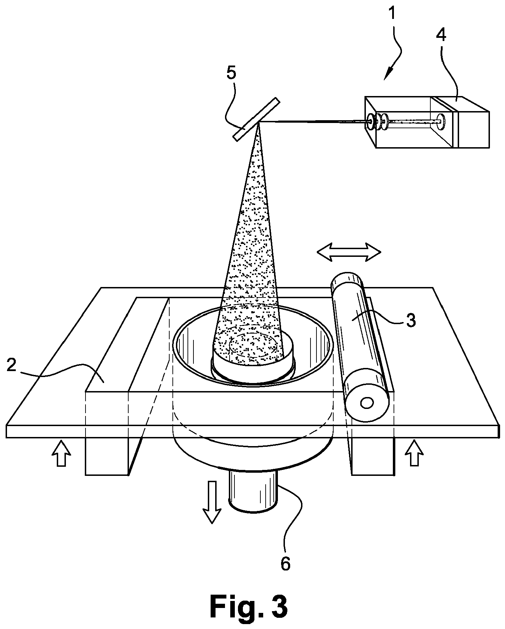

Le frittage sélectif par laser peut être mis en oeuvre à l'aide d'un dispositif 1 tel qu'illustré à la figure 3.

Le dispositif 1 de frittage sélectif par laser comprend un réservoir 2 d'alimentation de poudre dans lequel est placé le mélange, un rouleau 3 d'apport et de répartition de poudre, ainsi qu'un laser 4.

Le laser 4 est par exemple un laser $CO_2$ de puissance 35 W. Le faisceau laser est dirigé via un miroir 5 vers la zone de poudre que l'on souhaite fritter, sous une atmosphère de préférence neutre, par exemple sous atmosphère d'azote.

Le procédé utilise une plate-forme de fabrication chauffée à une température proche de la température de fusion du polymère. Le laser trace la forme couche par couche et fournit localement, à chaque strate successive du mélange initial de poudres, l'énergie thermique suffisante pour amener le polymère à une température entraînant sa fusion. Les poudres non frittées assurent naturellement le support des couches suivantes. La plate-forme de travail mobile descend de l'épaisseur d'une couche, le déplacement de la pièce verticale étant assuré par un piston 6. Une nouvelle couche de poudre est ensuite étalée par le rouleau 3 et le cycle recommence pour construire la pièce couche par couche de bas en haut. A la place du rouleau 3, on pourrait également utiliser un autre système mécanique comme par exemple un racleur.

Propriétés des pièces obtenues

Les pièces obtenues après frittage présentent un retrait homogène de 2 ± 0,2 % selon les axes horizontaux x et y, et de 1,3 ± 0,2 % selon l'axe vertical z. La densité apparente mesurée par le rapport masse/volume de la pièce est toujours supérieure ou égale à 99 % de la densité théorique, ce qui implique un taux de porosité volumique inférieur à 1 %. Les pièces obtenues sont étanches sous une pression minimale de 8 bars, de la température ambiante jusqu'à 100 °C. Le gain en volume d'usure apporté par rapport à la matrice de polyamide renforcée par de l'aluminium cristallin est d'environ 70 %. Le coefficient de frottement mesuré à l'aide d'un tribomètre de type pion sur disque (charge 10N, vitesse de glissement 16cm/s, diamètre de l'empreinte 1cm) montre un gain de l'ordre de 30 %. La dureté Shore D moyenne est de 79±1.

## Exemple 2 : aluminium seul

On a reproduit le mode opératoire de l'exemple 1, mais en utilisant un mélange de poudres constitué par 52 % en poids d'une poudre d'alliage d'aluminium cristallin (aluminium de série 1000) et 48 % en poids d'une poudre de polyamide qui est une poudre de Nylon 12.

Les pièces obtenues après frittage présentent un retrait homogène de $2 \pm 0,2$ % selon les axes x et y et de $1,3 \pm 0,2$ % selon l'axe z. La densité mesurée est toujours inférieure ou égale à 80 % de la densité théorique, ce qui implique un taux de porosité volumique supérieur à 20 %. Les pièces ne sont pas étanches sans imprégnation de résine en surface. Les propriétés tribologiques d'abrasion-usure et de frottement sont médiocres. La dureté Shore D moyenne est de 72±2.

## Exemple 3 : composition utilisée dans le procédé selon l'invention, avec AlCuFeB et un composé de renfort

On a reproduit le mode opératoire de l'exemple 1, mais en utilisant un mélange de poudres constitué de poudre de AlCuFeB et de poudre de $TiO_2$. Chaque nuance de poudre est pesée avec précision de sorte à obtenir une fraction volumique d'alliage métallique complexe de 5 % et une fraction volumique de $TiO_2$ de 15 % dans la pièce composite finale. Le mélange de poudres est constitué par 30 % en poids d'une poudre de l'alliage AlCuFeB de l'exemple 1 et 70 % en poids de $TiO_2$. Ce premier mélange de poudres est ensuite ajouté puis mélangé à une poudre de polyamide qui est une poudre de Nylon 12, le premier mélange de poudres représentant 50 % en poids du mélange total.

Les pièces obtenues après frittage présentent un retrait homogène de $2 \pm 0,2$ % selon les axes x et y et de $1,3 \pm 0,2$ % selon les axes z. La densité mesurée est toujours supérieure ou égale à 98 % de la densité théorique, ce qui implique un taux de porosité volumique inférieur à 2 %. Les pièces obtenues sont étanches et d'aspect métallique. Elles sont moins fragiles et leurs propriétés d'usure et de dureté sont améliorées par rapport à celles des pièces des exemples 1 et 2.

## Exemple 4 : composition utilisée dans le procédé selon l'invention, avec AlCuFeCr et un composé de renfort

On a reproduit le mode opératoire de l'exemple 1, mais en utilisant un mélange de poudres constitué de poudre de AlCuFeCr et de poudre de $TiO_2$. Chaque nuan-ce de poudre est pesée avec précision de sorte à obtenir une fraction volumique d'alliage métallique complexe de 2,5 % et une fraction volumique de $TiO_2$ de 12,5 % dans la pièce composite finale. Le mélange de poudres est constitué par 16,5 % en poids d'une poudre de l'alliage AlCuFeCr et 83,5 % en poids de $TiO_2$. Ce premier mélange de poudres est ensuite ajouté puis mélangé à une poudre de polyamide qui est une poudre de Nylon 12, le premier mélange de poudres représentant 41 % en poids du mélange total.

L'alliage AlCuFeCr est un alliage métallique complexe de composition atomique nominale $Al_{71}Cu_9Fe_{10}Cr_{10}$. Cet alliage est constitué de la phase approximante orthorhombique $O1\text{-}Al_{65}Cu_{20}Fe_{10}Cr_5$ et d'une phase quadratique isostructurale à la phase $\omega\text{-}Al_{70}Cu_{20}Fe_{10}$.

Les pièces obtenues après frittage présentent un retrait homogène de $2 \pm 0,2$ % selon les axes x et y et de $1,3 \pm 0,2$ % selon l'axe z. La densité mesurée est toujours supérieure ou égale à 98 % de la densité théorique, ce qui implique un taux de porosité volumique inférieur à 2 %. Les pièces obtenues sont étanches et d'aspect métallique. Les propriétés d'usure et de dureté sont améliorées par rapport à celles des pièces des exemples 1 et 2.

## Exemple 5 : AlCuFeCr et un composé de renfort de conductivité thermique supérieure à 100 W/m.K

On a reproduit le mode opératoire de l'exemple 1, mais en utilisant un mélange de poudres constitué de poudre AlCuFeCr et de poudre d'alliage d'aluminium de l'exemple 2. Chaque nuance de poudre est pesée avec précision de sorte à obtenir une fraction volumique d'alliage métallique complexe de 2,5 % et une fraction volumique d'aluminium cristallin de 12,5 % dans la pièce composite finale. Le mélange de poudres est constitué par 22,7 % en poids d'une poudre de l'alliage AlCuFeCr et 77,3 % en poids d'aluminium. Ce premier mélange de poudres est ensuite ajouté puis mélangé à une poudre de polyamide qui est une poudre de Nylon 12, le premier mélange de poudres représentant 34 % en poids du mélange total.

Les pièces obtenues après frittage présentent un retrait homogène de $2 \pm 0,2$% selon les axes x et y et de $1,3 \pm 0,2$ % selon l'axe z. Les pièces sont d'aspect métallique mais ne sont pas étanches sans imprégnation de résine en surface. Les propriétés tribologiques d'abrasion-usure sont médiocres.

## Revendications

**1.** Procédé de fabrication d'une pièce comprenant de l'aluminium, **caractérisé en ce qu'**il comprend une étape de frittage sélectif par laser d'un mélange comprenant :

- une poudre de polymère,
- une poudre d'un alliage d'aluminium quasi-cristallin, et
- une poudre d'un composé de renfort formant un angle de contact avec une goutte de polymère posée à sa surface inférieur à 90° et présentant une conductivité thermique à 20 °C inférieure à 100 W/m.K,

la somme du poids de l'alliage et du poids du composé de renfort n'excédant pas 80 % du poids total du mélange.

2.  Procédé selon la revendication 1, **caractérisé en ce que** le composé de renfort est choisi parmi les céramiques et les alliages métalliques.

3.  Procédé selon la revendication 2, **caractérisé en ce que** le composé de renfort est une céramique choisie parmi les borures, les carbures, les oxydes, les nitrures et leurs mélanges.

4.  Procédé selon la revendication 2, **caractérisé en ce que** le composé de renfort est un alliage métallique choisi parmi les aciers inoxydables, les alliages de titane, les bronzes, les superalliages et leurs mélanges.

5.  Procédé selon la revendication 1 ou 2, **caractérisé en ce que** le composé de renfort est choisi parmi $B_4C$, WC/Co, $TiB_2$, $TiO_2$, les composés à base de $Al_2O_3$, les composés à base de $SiO_2$, $ZrO_2$, BN, $Si_3N_4$, $Fe_{72}Cr_{18}Ni_{10}$, $Fe_{70}Cr_{25}Al_5$, les alliages titane/aluminium/vanadium, les alliages à base de cuivre, et les superalliages à base de nickel, de cobalt ou de fer.

6.  Procédé selon l'une des revendications 1 à 5, **caractérisé en ce que** l'alliage d'aluminium quasi-cristallin est un alliage métallique complexe comprenant un pourcentage atomique d'aluminium supérieur à 50 %.

7.  Procédé selon la revendication 6, **caractérisé en ce que** l'alliage d'aluminium quasi-cristallin est choisi parmi $Al_{62}Cu_{25,5}Fe_{12,5}$, $Al_{59}Cu_{25,5}Fe_{12,5}B_3$, $Al_{71}Cu_{9,7}Fe_{8,7}Cr_{10,6}$ et $Al_{71,3}Fe_{8,1}Co_{12,8}Cr_{7,8}$.

8.  Procédé selon l'une des revendications 1 à 7, **caractérisé en ce que** le polymère est un polymère organique thermoplastique choisi parmi les polyamides, les copolymères d'amide, les polyacétates, les polyéthylènes, le polyétheréthercétone.

9.  Procédé selon l'une des revendications 1 à 8, **caractérisé en ce que** le mélange contient de 1 à 30 % en poids d'alliage d'aluminium quasi-cristallin.

10. Procédé selon l'une des revendications 1 à 9, **caractérisé en ce que** le mélange contient de 20 à 98 % en poids de polymère.

11. Procédé selon l'une des revendications 1 à 10, **caractérisé en ce que** le mélange contient de 1 à 50 % en poids de composé de renfort.

12. Procédé selon l'une des revendications 1 à 11, **caractérisé en ce que** les particules d'alliage d'aluminium quasi-cristallin et de composé de renfort ont une granulométrie moyenne comprise entre 1 et 120 μm, et les particules de polymère ont une granulométrie moyenne comprise entre 1 et 120 μm.

13. Procédé selon l'une des revendications 1 à 12, **caractérisé en ce que** le mélange de poudres est chauffé jusqu'à une température inférieure de 1 à 10 °C à la température de fusion du polymère, puis **en ce que** l'énergie nécessaire à la fusion est apportée par le laser.

**Patentansprüche**

1.  Verfahren zur Herstellung eines Bauteils, umfassend Aluminium, **dadurch gekennzeichnet, dass** es einen Schritt des selektiven Lasersinterns eines Gemischs umfasst, das umfasst:

    - ein Polymerpulver,
    - ein Pulver einer quasi kristallinen Aluminiumlegierung, und
    - ein Pulver einer Verstärkungsverbindung, das einen Kontaktwinkel mit einem Polymertropfen, der auf seiner Oberfläche aufgesetzt ist, von unter 90° bildet und eine thermische Leitfähigkeit bei 20 °C unter 100 W/m.K aufweist,

    wobei die Summe des Gewichts der Legierung und des Gewichts der Verstärkungsverbindung 80 % des Gewichts insgesamt des Gemischs nicht übersteigt.

2.  Verfahren nach Anspruch 1, **dadurch gekennzeichnet, dass** die Verstärkungsverbindung aus den Keramiken und den Metalllegierungen ausgewählt ist.

3.  Verfahren nach Anspruch 2, **dadurch gekennzeichnet, dass** die Verstärkungsverbindung eine Keramik ist, die aus den Boriden, den Carbiden, den Oxiden, den Nitriden und ihren Gemischen ausgewählt ist.

4.  Verfahren nach Anspruch 2, **dadurch gekennzeichnet, dass** die Verstärkungsverbindung eine Metalllegierung ist, die aus den nichtrostenden Stählen, den Titanlegierungen, den Bronzen, den Superlegierungen und ihren Gemischen ausgewählt ist.

**5.** Verfahren nach Anspruch 1 oder 2, **dadurch gekennzeichnet, dass** die Verstärkungsverbindung aus $B_4C$, WC/Co, $TiB_2$, $TiO_2$, den Verbindungen auf der Basis von $Al_2O_3$, den Verbindungen auf der Basis von $SiO_2$, $ZrO_2$, BN, $Si_3N_4$, $Fe_{72}Cri_8Ni_{10}$, $Fe_{70}Cr_{25}Al_5$, den Titan-Aluminium-Vanadium-Legierungen, den Legierungen auf der Basis von Kupfer und den Superlegierungen auf der Basis von Nickel, von Kobalt oder von Eisen ausgewählt ist.

**6.** Verfahren nach einem der Ansprüche 1 bis 5, **dadurch gekennzeichnet, dass** die quasi kristalline Aluminiumlegierung eine komplexe Metalllegierung ist, umfassend einen Atomprozentsatz Aluminium von über 50 %.

**7.** Verfahren nach Anspruch 6, **dadurch gekennzeichnet, dass** die quasi kristalline Aluminiumlegierung aus $Al_{62}Cu_{25,5}Fe_{12,5}$, $Al_{59}Cu_{25,5}Fe_{12,5}B_3$, $Al_{71}Cu_{9,7}Fe_{8,7}Cr_{10,6}$ und $Al_{71,3}Fe_{8,1}Co_{12,8}Cr_{7,8}$ ausgewählt ist.

**8.** Verfahren nach einem der Ansprüche 1 bis 7, **dadurch gekennzeichnet, dass** das Polymer ein thermoplastisches organisches Polymer, ausgewählt aus den Polyamiden, den Amid-Copolymeren, den Polyacetaten, den Polyethylenen, dem Polyetheretherketon, ist.

**9.** Verfahren nach einem der Ansprüche 1 bis 8, **dadurch gekennzeichnet, dass** das Gemisch 1 bis 30 Gew.-% quasi kristalline Aluminiumlegierung enthält.

**10.** Verfahren nach einem der Ansprüche 1 bis 9, **dadurch gekennzeichnet, dass** das Gemisch 20 bis 98 Gew.-% Polymer enthält.

**11.** Verfahren nach einem der Ansprüche 1 bis 10, **dadurch gekennzeichnet, dass** das Gemisch 1 bis 50 Gew.-% Verstärkungsverbindung enthält.

**12.** Verfahren nach einem der Ansprüche 1 bis 11, **dadurch gekennzeichnet, dass** die Partikel quasi kristalliner Aluminiumlegierung und Verstärkungsverbindung eine mittlere Korngröße zwischen 1 und 120 pm inklusive haben und die Polymerpartikel eine mittlere Korngröße zwischen 1 und 120 pm inklusive haben.

**13.** Verfahren nach einem der Ansprüche 1 bis 12, **dadurch gekennzeichnet, dass** das Pulvergemisch bis auf eine Temperatur von 1 bis 10 °C unter der Schmelztemperatur des Polymers erwärmt wird, dann, dass die für das Schmelzen notwendige Energie von dem Laser geliefert wird.

**Claims**

**1.** A method for manufacturing a part comprising aluminum, **characterized in that** it comprises a step for selective laser sintering of a mixture comprising:

- a polymer powder,
- a powder of a quasi-crystalline aluminum alloy, and
- a powder of a filler compound forming a contact angle with a drop of polymer placed on its surface smaller than 90° and having a thermal conductivity at 20°C of less than 100 W/m.K,

the sum of the weight of the alloy and the weight of the filler compound not exceeding 80% of the total weight of the mixture.

**2.** The method according to claim 1, **characterized in that** the filler compound is chosen from among ceramics and metal alloys.

**3.** The method according to claim 2, **characterized in that** the filler compound is a ceramic chosen from among borides, carbides, oxides, nitrides and mixtures thereof.

**4.** The method according to claim 2, **characterized in that** the filler compound is a metal alloy chosen from among stainless steels, titanium alloys, bronzes, superalloys and mixtures thereof.

**5.** The method according to claim 1 or 2, **characterized in that** the filler compound is chosen from among $B_4C$, WC/Co, $TiB_2$, $TiO_2$, $Al_2O_3$-based compounds, $SiO_2$-based compounds, $ZrO_2$, BN, $Si_3N_4$, $Fe_{72}Cr_{18}Ni_{10}$, $Fe_{70}Cr_{25}Al_5$, titanium/aluminum/vanadium alloys, copper-based alloys, and superalloys based on nickel, cobalt or iron.

**6.** The method according to one of claims 1 to 5, **characterized in that** the quasi-crystalline aluminum alloy is a complex metal alloy comprising an atomic percentage of aluminum greater than 50%.

**7.** The method according to claim 6, **characterized in that** the quasi-crystalline aluminum alloy is chosen from among $Al_{62}Cu_{25.5}Fe_{12.5}$, $Al_{59}Cu_{25.5}Fe_{12.5}B_3$, $Al_{71}Cu_{9.7}Fe_{8.7}Cr_{10.6}$ and $Al_{71.3}Fe_{8.1}Co_{12.8}Cr_{7.8}$.

**8.** The method according to one of claims 1 to 7, **characterized in that** the polymer is a thermoplastic organic polymer chosen from among polyamides, amide copolymers, polyacetates, polyethylenes, polyether ether ketone.

**9.** The method according to one of claims 1 to 8, **characterized in that** the mixture contains from 1 to 30

**EP 2 747 916 B1**

wt% of quasi-crystalline aluminum alloy.

10. The method according to one of claims 1 to 9, **characterized in that** the mixture contains from 20 to 98 wt% of polymer.

11. The method according to one of claims 1 to 10, **characterized in that** the mixture contains from 1 to 50 wt% of filler compound.

12. The method according to one of claims 1 to 11, **characterized in that** the particles of quasi-crystalline aluminum alloy and filler compound have a mean particle size comprised between 1 and 120 $\mu$m, and the polymer particles have a mean particle size comprised between 1 and 120 $\mu$m.

13. The method according to one of claims 1 to 12, **characterized in that** the mixture of powders is heated to a temperature from 1 to 10°C lower than the melting temperature of the polymer, then **in that** the energy necessary for melting is contributed by the laser.

**Fig. 1**

**Fig. 2**

**Fig. 3**

## RÉFÉRENCES CITÉES DANS LA DESCRIPTION

**Documents brevets cités dans la description**

- FR 2950826
- EP 1468812 A1